# EUROPÄISCHE PATENTSCHRIFT

(11) **EP 0 571 866 B1**
(45) Veröffentlichungstag und Bekanntmachung des Hinweises auf die Patenterteilung: **09.10.1996**
(21) Anmeldenummer: 93108037.8
(22) Anmeldetag: 17.05.1993
(51) Int. Cl.: C04B 35/10, B24D 3/16, C08J 5/14, C09K 3/14

(54) **Gesintertes Verbundschleifkorn, Verfahren zu seiner Herstellung sowie seine Verwendung**
Sintered composite abrasive grain, method of preparation and use thereof
Grain composite fritté abrasif, procédé de préparation et utilisation

(30) Priorität: 29.05.1992 DE 4217721
(43) Veröffentlichungstag der Anmeldung: 01.12.1993
(73) Patentinhaber: H.C. Starck GmbH & Co. KG, D-38642 Goslar (DE)
(72) Erfinder: Möltgen, Paul, Dr., W-7887 Laufenburg (DE); Winter, Gerhard, Prof. Dr., W-3380 Goslar (DE); Wilhelm, Pirmin, W-7880 Bad Säckingen (DE)
(74) Vertreter: Steiling, Lothar, Dr.

(56) Entgegenhaltungen:
- EP-A- 0 279 673
- EP-A- 0 395 087
- EP-A- 0 406 847
- EP-A- 0 491 184
- US-A- 5 094 672

## Beschreibung

Die vorliegende Erfindung betrifft ein gesintertes Verbundschleifkorn auf der Basis einer α-Al₂O₃-Matrix und mindestens eines Hartstoffes, Verfahren zur Herstellung des gesinterten Verbundschleifkorns sowie seine Verwendung.

Aufgrund ihrer hohen Zähigkeit und ihrer spanabhebenden Wirkung kommt den Verbundkörpern eine große Bedeutung als Schneidkeramik zu. Gesinterte Verbundkörper auf Al₂O₃-Basis mit eingelagerten Hartstoffen sind Gegenstand der DE-A 1 671 095, DE-A 2 471 295 und DE-A 3 529 265. Lee und Kim beschreiben die Herstellung von Al₂O₃-TiC-Verbundkörpern durch druckloses Sintern in J. Am. Ceram. Soc., 72 (8), 1333-37(1989). Al₂O₃-SiC-Verbundkörper gehen aus den EP-A 0 311 289, FR-A 2 349 633 und FR-A 2 430 445 hervor.

Durch Sintern entsprechender pulverförmiger Ausgangsstoffe bei Temperaturen zwischen 1500°C und 1900°C erhalt man nach der EP-B 0 317 147 einen Al₂O₃-Verbundkörper. Das System Al₂O₃-Al₄C₃-AlN sowie die Bildung von Oxycarbiden und Oxynitriden des Aluminiums werden in J. Am. Ceram. Soc., 72 (9), 1704-709 (1989) beschrieben.

SiC-Whisker-Reinforced Ceramics sind Gegenstand einer Veröffentlichung von Wei und Becher in Am. Ceram. Soc. Bull. 64(2) 298 - 304(1985).

Al₂O₃-B₄C-Sinterkörper werden von K.C. Radford in J. Mater. Sci., 18, No. 3, 669-678 (1983) vorgestellt.

Werkstoffe, bei denen u. a. auch Carbonitride (Mischphasen aus Nitriden und Carbiden) in die Al₂O₃-Matrix eingebaut werden, sind Gegenstand der US-A-4,320,203.

In der US-A-4,325,710 werden Materialien beschrieben, deren Matrix mit TiN, Zr und ZrC dotiert ist.

Yamamoto, Sakurai und Tanaka beschreiben in der US-A 4,204,873 keramische Werkstoffe, deren Struktur durch den Einbau von WC oder W₂C in Kombination mit anderen Hartstoffen, verstärkt wird.

Bei all diesen beschriebenen Verfahren mischt man die Ausgangsstoffe in Form ihrer Pulver, verpreßt die Mischung und sintert den Pressling bei relativ hohen Temperaturen. In einigen Fällen arbeitet man zusätzlich unter Druck und Inertgas. Die Kristallitgröße der Al₂O₃-Matrix liegt dabei in keinem Fall unter 1 micron.

Die Schleifleistung der nach diesen Verfahren erhaltenen Keramik erfüllt nicht die hohen Anforderungen, die heute an moderne Schleifmittel gestellt werden.

Darüber hinaus werden auch Verfahren beschrieben, über die Schmelze zu Al₂O₃-Verbundkörpern zu gelangen. So werden Einlagerungsverbindungen von Al₄O₄C und Al₂OC in einer Al₂O₃-Matrix durch Schmelzen und kontrolliertes Abkühlen eines Gemisches von Al₂O₃ mit einem Kohlenstoffträger erhalten (EP-A 0 022 420, AT-A 379 979). Ein Verbundkörper, in dem neben den Oxycarbiden auch Oxynitride enthalten sind, wird in der FR-A 2 628 414 beschrieben. Ein Verbundkörper aus Al₂O₃ und B₄C wurde bereits 1902 nach der DE-C 152 501 durch Schmelzen im elektrischen Widerstandsofen hergestellt. Die DE-B 1 049 290 beschreibt ein Schleifmittel auf Basis von Al₂O₃ mit eingelagertem TiC, das ebenfalls über die Schmelze erhalten wird.

Verglichen mit den oben beschriebenen Sinterkörpern ist die Al₂O₃-Matrix in den erschmolzenen Materialien noch wesentlich grobkristalliner.

Aus der älteren Anmeldung EP-A1-0 491 184 ist ein Verfahren zur Herstellung gesinterter Verbundschleifkörper auf Basis einer α-Al₂O₃-Matrix und mindestens eines Hartstoffes bekannt, wobei die Primärkristallitgröße des α-Al₂O₃ im Bereich 0,1 bis 1 µm beträgt und ein üblicherweise hergestelltes α-Al₂O₃-Sol oder -Gel mit Hartstoffpartikeln gesintert wird.

Aus der EP-A-0 406 847 geht ein Verfahren zur Herstellung eines Sinterkörpers hervor, wobei dem Sol feindisperses Titanoxid, feindisperses Aluminiumtitanat oder eine entsprechende Vorstufe zugegeben wird. Das Aluminiumtitanat oder während des Kalzinier- oder Sinterschrittes gebildete Aluminumtitanat dient hierbei als Sinterhilfe. Aus diesem Grund wird das Titanoxid möglichst feinteilig eingesetzt und darf eine mittlere Teilchengröße von 0,5 mm nicht überschreiten.

Aufgabe dieser Erfindung ist somit die Bereitstellung von Schleifmitteln, die die beschriebenen Nachteile der eingangs erwähnten keramischen Werkstoffe nicht aufweisen.

Diese Anforderungen werden erfüllt durch ein gesintertes Verbundschleifkorn auf der Basis einer α-Al₂O₃-Matrix und mindestens eines Hartstoffes, wobei die Primärkristallitgrößen des α-Al₂O₃, das über das Sol-Gel-Verfahren erhalten wird, im Bereich von 0,1 bis 1 µm liegen, dadurch gekennzeichnet, daß die Hartstoffe isometrische Körner sind und Korngrößen im Bereich 10 bis 70 µm aufweisen und ihr Anteil, bezogen auf das gesinterte Schleifkorn, 0,1 bis <1 Gew.-% aufweist. Ein solches gesintertes Verbundschleifkorn ist Gegenstand dieser Erfindung.

Durch die Submicron-Struktur des erfindungsgemäßen Verbundschleifkorns bedingt werden besondere schleiftechnische Vorteile erzielt.

Bei bestimmten Schleifprozessen brechen in Abhängigkeit vom Anpreßdruck kleinere Bereiche aus dem Schleifkorn. Es kommt so zur Ausbildung neuer Schneidkanten. Durch diesen Selbstschärfemechanismus wird die Schleifleistung des gesinterten mikrokristallinen Schleifkorns gegenüber herkömmlichen, geschmolzenenen oder gesinterter Schleifkörner erheblich gesteigert.

Die erfindungsgemäß bevorzugten Hartstoffe sind dabei einer oder mehrere der Verbindungsklassen der Carbide, Silizide, Oxide, Boride, Nitride oder Mischphasen dieser Hartstoffe wie Oxycarbide, Oxynitride, Carbonitride oder andere Kombinationen wie z.b. Sialone.

Es wurde gefunden, daß durch den Einbau isometrischer Hartstoffe in eine Sol-Gel-Matrix Sollbruchstellen vorgezeichnet werden, die einen Selbstschärfemechanismus auch bei niederigen Anpressdrücken ermöglichen. Überraschend war, daß ein so hergestellten Verbundschleifkorn auch bei hohen Drücken eine außerordentlich große Leistungsstärke zeigt, was auf den immer noch funktionierenden Selbstschärfmechanismus, kombiniert mit der schleifaktiven Wirkung des Hartstoffes, zurückzuführen ist.

Dadurch erweitert sich die Einsetzbarkeit des Verbundschleifkorns im Vergleich zu den konventionellen Sol-Gel-Korunden erheblich.

Verschleißuntersuchungen zeigten, daß überraschenderweise nicht der Hartstoff als Ganzes oder bevorzugt aus dem Verbund ausbricht.

So wurde beispielsweise bei REM-Untersuchungen von gebrauchten Schleifscheiben, die aus einem Verbundschleifkorn mit 4 % SiC-Anteil hergestellt waren, festgestellt, daß die Rißbildung im Korn und somit die Ausbildung neuer Schneidkanten nicht durch den eingelagerten Hartstoff bzw. dessen Korngrenzen direkt bestimmt wird.

Bei Untersuchungen verschiedener Bruchstellen konnte man Hartstoffe erkennen, die aus der Matrix herausragten. Daneben waren Löcher in der Matrix zu erkennen, die durch das vollständige oder teilweise Herausbrechen eines Hartstoffpartikels entstanden waren. Etwa in gleichen Anteilen traten Bruchstellen auf, bei denen Hartstoff und Matrix eine gemeinsame Bruchfläche bildeten.

Die unterschiedlichen Rißbildungen treten in etwa gleichen Anteilen auf. Eine Bevorzugung eines bestimmten Bruchverhaltens ist nicht zu erkennen.

Voraussetzung für das oben geschilderte Bruchverhalten und damit für das Selbstschärfen und die schleifaktive Wirkung des Hartstoffes ist eine gute Einbindung des Hartstoffes in die Matrix. Bei ungenügender Einbindung verliert der gesamte Verbund seine Stabilität und das Schleifkorn wird schon bei geringer Belastung zerstört.

Es wurde gefunden, daß die Einbindung um so besser ist, je feiner die Al203-Matrix strukturiert ist. Es kann daher vorteilhaft sein, Sinteradditive einzusetzen, die das Kristallwachstum der Matrix günstig beeinflussen.

Als Sinterhilfen kommen entweder Kristallisationskeime (arteigene = α-Al203 oder artfremde wie Fe203, Cr203, Ti203 o.a.) oder Kristallwachstumsinhibitoren (Spinelle, Spinellbildner wie MgO, CoO, NiO, ZnO, Oxide wie HfO₂, TiO₂, Al₂TiO₅, CeO₂, ZrO₂, CuO, Li₂O, SrO, BaO, K₂O, Nb₂O₅, SiO₂, B₂O₃ o.a) in Frage. Es ist auch möglich, Kombinationen aus verschiedenen Sinteradditiven oder entsprechende Vorstoffe einzusetzen, die sich bei den Reaktionsbedingungen zu einem oder mehreren der obengenannten Sinterhilfen umsetzen.

Sehr gute Ergebnisse konnten auch mit einer Kombination aus Nb₂O₅ und MgO oder mit feinstvermahlenem SiC erzielt werden. Die Primärkristallitgröße der Produkte, die mit Hilfe dieser Sinteradditive erhalten wurden, lagen unter 0,2 µm und deren Härte lag bei 22-23 GPa (Vickers).

Auch andere feinstvermahlene Carbide wie Cr₂C₃, TiC, NbC, TaC, o.a. können vorteilhaft als Sinteradditive eingesetzt werden.

Als eine weitere Möglichkeit, die Einbindung der Hartstoffe in die Matrix zu verbessern, bietet es sich an, den Hartstoff mit einer Ummantelung zu versehen. Beste Ergebnisse werden mit keramischen Ummantelungen erzielt. Als einfachstes Beispiel kann hier keramisch ummantelter Schmelzkorund als Hartstoff genannt werden. Die Ummantelung besteht in diesem Fall aus einer Mischung aus Wasserglas, Glasmehl und Eisenoxid, die bei ca. 800°C auf die Oberfläche des Korundes aufgebracht wird. Die Eisenoxidpartikel bewirken eine Vergrößerung der Oberfläche des Hartstoffes, wodurch der Halt in der Matrix verbessert wird.

Als zusätzlicher positiver Effekt ist zu erkennen, daß die Glasphase in die Matrix diffundiert und eine zusätzliche Bindungsverstärkung bewirkt. Möglicherweise ist für die Bindungsverstärkung die Ausbildung einer Mullitphase verantwortlich, die aber aufgrund der sehr geringen Konzentration der Ummantelung nicht nachgewiesen werden konnte.

Vorteilhaft wirkt sich aus, wenn statt des Eisenoxids Magnesiumoxid bzw. Mischungen aus Eisenoxid und Magnesium in der Ummantelung eingesetzt werden. In diesen Fällen kommen neben den obengenannten Vorteilen noch die kristallwachstumshemmende Wirkung des Magnesiumoxids zum Tragen, was sich in einer deutlich feiner strukturierten Matrix bemerkbar macht.

Allgemein wirken sich die gebräuchlichen Ummantelungstypen aufgrund ihrer oberflächenvergrößernden Wirkung positiv auf die Einbindung aus, wobei selbst geringe Beimengungen von Sinteradditiven in der Ummantelung einen zusätzlichen Effekt zeigen.

Oxidationsempfindliche Hartstoffe oder Hartstoffe, die mit der Al203-Matrix reagieren, können zusätzlich durch Ummantelungen geschützt werden.

Ohne zusätzlichen Einsatz von Sinteradditiven und/oder Kristallisationskeimen kann man ein Schleifkorn erhalten, dessen Matrix aus Al₂O₃-Kristalliten aufgebaut ist, deren Primärkristallgröße bevorzugt unter 0,4 micron liegt. Ein solches Verbundschleifkorn vereint die Vorteile der Sol-Gel-Korunde mit denen keramischer Verbundkörper bzw. der oben beschriebenen Schleifkorn-Agglomerate.

Durch zusätzlichen Einsatz von Sinteradditiven und/oder Kristallisationskeimen gelingt es, die Kristallitgröße in der Al₂O₃-Matrix bevorzugt unter 0,2 micron zu halten.

Besonders bevorzugte Hartstoffe im Sinne dieser Erfindung sind einer oder mehrere der Gruppe SiC, TiB₂, Al₂O₃, TiC, AlON, Si₃N₄, SiAlON, TiN, B₄C, TiCN, WTiC, WC, Cr₃C₂, VC, AlN, TaC, NbC, W₂C, CBN, CrAlC, VMeC, TiMeC, wobei Me = Metalle der Gruppen 4a, 5a, 6a des PSE sind.

Überraschend wurde beim Einsatz von Carbiden als erfindungsgemäß bevorzugte Hartstoffe gefunden, daß selbst im Vergleich zur angestrebten Matrix grobkristalline Hartstoffe das Kristallwachstum der Al₂O₃-Matrix günstig beeinflußen und eine hervorragende Wirkung als Kristallwachstumsinhibitoren besitzen.

Carbide sind als Kristallwachstumsinhibitoren oder Sinteradditive für Al₂O₃-Keramiken bisher nicht beschrieben.

Beste Ergebnisse wurden erzielt, wenn der Hartstoff SiC ist. Dies gilt auch für Cr₃C₂. Ebenso vorteilhaft kann TiC, TiCN und ummantelter Korund sein.

Die erfindungsgemäßen Verbundschleifkörner zeichnen sich durch eine enorme Vielseitigkeit aus, da man je nach Anwendungszweck durch einfache Variation der Korngröße des Hartstoffes, der Menge und der Art des Hartstoffes sowie durch zusätzlichen Einsatz von Sinteradditiven gezielt eines der Funktionsprinzipien der obengenannten Spezies in den Vordergrund rücken kann und so die Möglichkeit hat, für eine Vielzahl von Schleifoperationen das optimale Schleifkorn zu entwickeln.

Gegenüber reinen Hartstoffen haben die erfindungsgemäßen Verbundschleifkörner den Vorteil, daß aufgrund ihres Gefügeaufbaus der Schleifeffekt der Hartstoffe genutzt werden kann, ohne daß die Nachteile der Hartstoffe (Sprödigkeit, Temperaturempfindlichkeit, mangelhafte chemische Resistenz u.a.) ins Gewicht fallen.

Die schleifaktive Wirkung der Submicron-alpha-Al₂O₃-Matrix bringt den erfindungsgemäßen Verbundschleifkörnern beim Schleifprozeß Vorteile gegenüber den herkömmlichen Schneidkeramiken, die außerdem den Nachteil haben, daß sie nur unter großem Aufwand zu einer Schleifkörnung aufbereitet werden können.

In der DE-A 2 414 047 werden zwar Kompositschleifmaterialien beschrieben, die über das Sol-Gel-Verfahren hergestellt werden. Es geht dort darum, äußerst feine Schleifkörnungen verarbeitbar zu machen. Die Matrix die aus SiO₂, Al₂O₃, TiO₂, ZrO₂ oder Gemischen daraus bestehen kann, ist jedoch mikroporös und nicht gesintert und nimmt an dem Schleifprozeß nicht teil.

Bei den erfindungsgemäßen Verbundschleifkörnern hingegen besitzt die Matrix bevorzugt eine Dichte von über 98 % der Theorie, eine Härte größer als 19 GPa (HV 200) (Vickers) und nimmt aufgrund ihrer mikrokristallinen Struktur aktiv am Schleifprozeß teil. Ein weiterer Vorteil der erfindungsgemäßen Verbundschleifkörner ist, daß sie wesentlich höheren Anpreßdrücken ausgesetzt werden können. Einsatzmöglichkeit und Leistungsfähigkeit gehen daher weit über die der in DE-A 2 414 047 beschriebenen Verbindungen hinaus.

In der US-A 4 855 264 werden Verbund-Schleifkörper auf Basis Al₂O₃/AlON beschrieben, die über das Sol-Gel-Verfahren und anschließendem Reaktionssintern zum AlON hergestellt werden.

Nachteile des Verfahrens sind:
- hohe Sintertemperaturen (1600°C-2000°C), die zu einem Kristallwachstum auf mindestens 2 µm führen
- teure Ausgangsstoffe
- aufwendige Verfahrenstechnik mit vielen Verfahrensschritten.

Aus der US-A 4 844 848 gehen Keramik-Verbundkörper auf der Basis von Al₂O₃-Gel-Pulver mit 5 bis 90 Gew.-% Zusatzstoffen, insbesondere SiC-Whiskern hervor. Aufgrund ihrer Herstellungsprozesse sind diese Keramik-Verbundkörper aber nicht mikrokristallin. Sie weisen nicht die für die erfindungsgemäßen Verbundschleifkörner notwendige Eigenschaft der Anfälligkeit für eine Rißbildung auf.

Darüber hinaus ist das Verfahren komplizierter und damit teurer, da man eine Zwischenstufe isoliert und einen zusätzlichen Verfahrensschritt (Verpressen) einfügt. Dadurch gehen die für die Herstellung eines Schleifmittels relevanten Vorteile des direkten Sol-Gel-Verfahrens teilweise verloren, da das Gel durch den Trocknungsprozeß seine überragende Sinteraktivität, die man auf Polykondensationsreaktionen im wäßrigen Sol- bzw. Gel-Zustand zurückführt, teilweise einbüßt.

Gegenstand dieser Erfindung ist auch ein Verfahren zur Herstellung der erfindungsgemäßen gesinterten Verbundschleifkörner, wobei ein üblicherweise hergestelltes Al₂O₃-Sol oder -Gel mit Hartstoffpartikeln definierter Korngröße versetzt, anschließend getrocknet, kalziniert und gesintert wird.

Im Gegensatz zum Verfahren der US-A 4 844 848 wird beim erfindungsgemäßen Verfahren der Hartstoff dem Sol bzw. Gel direkt zugegeben. Das Sol bzw. Gel wird homogenisiert, im Falle des Sols geliert, getrocknet, kalziniert und gesintert.

Bei Verwendung von oxidationsempfindlichen Hartstoffen kann im Vakuum und/oder unter Inertgas gearbeitet werden. Hydrolyseempfindliche Hartstoffe werden bevorzugt vor ihrem Einsatz im Sol-Gel-Prozeß in einem organischen Lösungsmittel (z.B. Aceton oder Alkohole), das mit Wasser mischbar ist, dispergiert.

In einigen Fällen ist eine partielle Oxidation durchaus erwünscht, wenn es zur Bildung von Oxycarbiden oder Oxynitriden kommt, die als Hartstoffe im Sinne der Erfindung anzusehen sind.

Stoffe, die sich trotz dieser Vorsichtsmaßnahmen zersetzen bzw. weitgehend oxidiert werden, müssen durch spezielle Ummantelungen geschützt werden.

Gegenstand dieser Erfindung ist auch die Verwendung der erfindungsgemäßen gesinterten Verbundschleifkörner zur Herstellung von Schleifmitteln oder Schleifwerkzeugen.

Im folgenden wird die Erfindung beispielhaft erläutert, ohne daß darin eine Einschränkung zu sehen ist.

### Beispiel 1

500 g Aluminiumoxidmonohydrat (Disperal der Fa. Condea) wurden in 2 1 Wasser unter Zusatz von Säure (HNO₃) dispergiert. Die Suspension wurde zentrifugiert, um den nicht dispergierten Anteil an Ausgangsstoff (ca. 2 %) abzutrennen. Unter ständigem Rühren wurde die Suspension zum Sieden erhitzt und mit 1,5 g SiC (Korngröße P600) der Fa. Elektroschmelzwerk Kempten versetzt Schon beim Erwärmen zeigte sich eine deutliche Zunahme der Viskosität des Sols, was sich bei der Zugabe des Hartstoffes weiter verstärkte. Einige Minuten nach vollständiger Zugabe des Hartstoffes war der Gelierungsprozeß abgeschlossen. Das Gel wurde bei 65°C im Trockenschrank getrocknet Das getrocknete Gel wurde bei 500°C kalziniert und 4 Stunden bei 1250°C gesintert

Der Verbundschleifkörper kann vor oder nach dem Sintern auf die gewünschte Korngröße zerkleinert werden.

| Analyse | | | | |
|---|---|---|---|---|
| Hartstoffanteil | Härte (HV 0,2) | Dichte | durchschnittliche Kristallitgröße | |
| | | | Matrix | SiC |
| 0,4 % SiC | 2320 | 98,5 % | kleiner 1 µm | 25 µm |

| Schleiftests Fiberscheibe | |
|---|---|
| Schleifmaterial (Korn 36) | Zahl der geschliffenen Werkstücke |
| Sol-Gel-Korund | 100 |
| eutektischer Zirkonkorund | 55 |
| Beispiel 1 | 150 |

| Schleifband (Korn 36) | |
|---|---|
| Schleifmaterial | Abtrag gegen C 45 Stahl |
| Sol-Gel-Korund | 2934 g |
| Zirkonkorund | 2492 g |
| Beispiel 1 | 3826 g |

| Schleifband (Korn 60) | |
|---|---|
| Schleifmaterial | Abtrag gegen rostfreien Stahl |
| Sol-Gel-Korund | 1320 g |
| Zirkonkorund | 1150 g |
| Beispiel 1 | 1640 g |

| Schleifscheibe (Korn 60) | |
|---|---|
| Schleifmaterial | G-Faktor (Quotient aus Materialabtrag und Scheibenverschleiß) |
| Sol-Gel-Korund (ex Norton) | 225 |
| Sol-Gel-Korund (ex 3M) | 192 |
| Beispiel 1 | 283 |

### Beispiel 2

Die Präparation des Verbundschleifkörpers erfolgte wie in Beispiel 1.

Als Hartstoff wurden 3 g SiC zugegeben.

| Analyse | | | | |
|---|---|---|---|---|
| Hartstoffanteil | Härte (HV 0,2) | Dichte | durchschnittliche Kristallitgröße | |
| | | | Matrix | SiC |
| 0,8 % SiC | 2070 | 97,2 % | < 1 µm | 30 µm |

### Schleiftest

| Schleifscheibe (Korn 36) | |
|---|---|
| Schleifmaterial | G-Faktor |
| Sol-Gel-Korund (ex Norton) | 237 |
| Sol-Gel-Korund (ex 3M) | 186 |
| Beispiel 2 | 253 |

### Beispiel 3

Wie in Beispiel 1. Als Hartstoff wurden 3 g TiCN zugegeben.

Kalziniert wurde bei 500°C. Es folgte eine Sinterung bei 1250°C.

| Analyse | | | | |
|---|---|---|---|---|
| Hartstoffanteil | Härte (HV 0,2) | Dichte | durchschnittliche Kristallitgröße | |
| | | | Matrix | SiC |
| 0,8 % TiCN | 2264 | 98,9 % | < 1 µm | 30 µm |

### Schleiftest

| Schleifscheibe (Korn 36) | |
|---|---|
| Schleifmaterial | G-Faktor |
| Sol-Gel-Korund (ex 3M) | 180 |
| Sol-Gel-Korund (ex Norton) | 224 |
| Beispiel 3 | 297 |

### Beispiel 4

Wie Beispiel 3.

An Stelle von TiCN wurden 3 g TiC zugegeben (Hersteller H.C. Starck).

| Analyse | | | | |
|---|---|---|---|---|
| Hartstoffanteil | Härte (HV 0,2) | Dichte | durchschnittliche Kristallitgröße | |
| | | | Matrix | Hartstoff |
| 0,8 % TiC | 1894 | 96,5 % | < 1 µm | 30 µm |

### Schleiftest

| Schleifscheibe (Korn 36) | |
|---|---|
| Schleifmaterial | G-Faktor |
| Sol-Gel-Korund (ex 3M) | 194 |
| Sol-Gel-Korund (ex Norton) | 250 |
| Beispiel 4 | 288 |

### Beispiel 5

Wie Beispiel 3.

Es wurden 1,5 g TiC zugegeben.

| Analyse | | | | |
|---|---|---|---|---|
| Hartstoffanteil | Härte (HV 0,2) | Dichte | durchschnittliche Kristallitgröße | |
| | | | Matrix | Hartstoff |
| 0,4 % TiC | 2154 | 98,7 % | < 1 µm | 10 µm |

### Schleiftest

| Schleifscheibe (Korn 36) | |
|---|---|
| Schleifmaterial | G-Faktor |
| Sol-Gel-Korund (ex 3M) | 172 |
| Sol-Gel-Korund (ex Norton) | 238 |
| Beispiel 5 | 321 |

### Beispiel 6

Wie Beispiel 3

Es wurden 3,6 g Cr₃C₂ zugegeben.

| Analyse | | | | |
|---|---|---|---|---|
| Hartstoffanteil | Härte (HV 0,2) | Dichte | durchschnittliche Kristallitgröße | |
| | | | Matrix | Hartstoff |
| 0,9 % Cr₃C₂ | 2346 | 98,5 % | < 1 µm | 30 µm |

### Schleiftest

| Schleifscheibe (Korn 36) | |
|---|---|
| Schleifmaterial | G-Faktor |
| Sol-Gel-Korund (ex 3M) | 202 |
| Sol-Gel-Korund (ex Norton) | 278 |
| Beispiel 6 | 343 |

## Patentansprüche

1. Gesinterte Verbundschleifkörner auf Basis einer α-Al₂O₃-Matrix und mindestens eines Hartstoffes, wobei die Primärkristallitgröße des α-Al₂O₃ im Bereich 0,1 bis 1 µm liegt und die α-Al₂O₃-Matrix über das Sol-Gel-Verfahren erhalten wurde, dadurch gekennzeichnet, daß die Hartstoffe isometrische Körner mit Korngrößen im Bereich von 10 bis 70 µm sind und die Menge der Hartstoffe 0,1 bis <1 Gew.-%, bezogen auf die gesinterten Verbundschleifkörner, beträgt.

2. Gesinterte Verbundschleifkörner gemäß Anspruch 1, dadurch gekennzeichnet, daß die Hartstoffe einer oder mehrere aus der Verbindungsklasse der Carbide, Silizide, Oxide, Boride, Nitride oder Mischphasen dieser Hartstoffe wie Oxycarbide, Oxynitride, Carbonitride oder anderer Kombinationen davon sind.

3. Gesinterte Verbundschleifkörner gemäß einem der Ansprüche 1 oder 2, dadurch gekennzeichnet, daß die Hartstoffe einer oder mehrerer der Gruppe SiC, TiB₂, Al₂O₃, TiC, A10N, Si₃N₄, B₄C, TiN, TiCN, WC, Cr₃C₂, VC, AIN, WTiC, SiA10N, TaC, NbC, W₂C, CBN, CrAIC,VMeC, TiMeC, wobei Me = Metalle der Gruppen 4a, 5a, 6a des PSE sind.

4. Gesinterte Verbundschleifkörner gemäß einem oder mehreren der Ansprüche 1 bis 3, dadurch gekennzeichnet, daß der Hartstoff aus der Gruppe der Carbide ist.

5. Gesinterte Verbundschleifkörner gemäß Anspruch 4, dadurch gekennzeichnet, daß der Hartstoff SiC ist.

6. Gesinterte Verbundschleifkörner gemäß Anspruch 4, dadurch gekennzeichnet, daß der Hartstoff TiC ist.

7. Gesinterte Verbundschleifkörner gemäß Anspruch 4, dadurch gekennzeichnet, daß der Hartstoff Cr₃C₂ ist.

8. Verfahren zur Herstellung gesinterter Verbundschleifkörner gemäß einem oder mehreren der Ansprüche 1 bis 7, dadurch gekennzeichnet, daß ein auf übliche Weise hergestelltes Al₂O₃-Sol oder -Gel mit Hartstoffpartikeln versehen und gesintert wird.

9. Verwendung der gesinterten Verbundschleifkörner gemäß einem oder mehreren der Ansprüche 1 bis 8 zur Herstellung von Schleifmitteln oder Schleifwerkzeugen.

## Claims

1. Sintered composite abrasive grits based on an α-Al₂0₃ matrix and at least one hard material, wherein the primary crystallite size of the α-Al₂O₃ is in the range 0.1 to 1 µm and the α-Al₂O₃ matrix was obtained by the sol-gel process, characterised in that the hard materials are isometric particles with particle sizes in the range 10 to 70 µm and the amount of hard material is 0.1 to < 1 wt.%, with reference to the sintered composite abrasive grits.

2. Sintered composite abrasive grits according to Claim 1, characterised in that the hard materials are from one or more of the compound classes carbides, silicides, oxides, borides, nitrides or mixed phases of these hard materials such as oxycarbides, oxynitrides, carbonitrides or other combinations thereof.

3. Sintered composite abrasive grits according to Claim 1 or 2, characterised in that the hard materials are one or more of the group SiC, TiB₂, Al₂O₃, TiC, AlON, Si₃N₄, B₄C, TiN, TiCN, WC, Cr₃C₂, VC, AlN, WTiC, SiAlON, TaC, NbC, W₂C, CBN, CrAlC, VMeC, TiMeC, wherein Me = metals from groups 4a, 5a, 6a of the Periodic Table of elements.

4. Sintered composite abrasive grits according to one or more of Claims 1 to 3, characterised in that the hard material is from the group of carbides.

5. Sintered composite abrasive grits according to Claim 4, characterised in that the hard material is SiC.

6. Sintered composite abrasive grits according to Claim 4, characterised in that the hard material is TiC.

7. Sintered composite abrasive grits according to Claim 4, characterised in that the hard material is Cr₃C₂.

8. A process for the preparation of sintered composite abrasive grits according to one or more of Claims 1 to 7, characterised in that a conventionally prepared Al₂O₃ sol or gel is provided with particles of hard material and sintered.

9. Use of the sintered composite abrasive grits according to one or more of Claims 1 to 8 for the preparation of abrasives or grinding tools.

## Revendications

1. Grains abrasifs composites frittés à base d'une gangue d'α-Al₂O₃ et d'au moins une matière dure, la dimension de cristallite primaire de l'α-Al₂O₃ se situant dans l'intervalle de 0,1 à 1 µm et la gangue d'α-Al₂O₃ ayant été obtenue par le procédé sol-gel, caractérisés en ce que les matières dures consistent en grains isométriques à des dimensions dans l'intervalle de 10 à 70 µm et en ce que la quantité des matières dures est de 0,1 à moins de 1 % du poids des grains abrasifs composites frittés.

2. Grains abrasifs composites frittés selon revendication 1 caractérisés en ce que les matières dures consistent en un ou plusieurs composés choisis dans la classe des carbures, des siliciures, des oxydes, des borures, des nitrures ou des phases mixtes de ces matières dures telles que les oxycarbures, les oxynitrures, les carbonitrures ou en d'autres combinaisons de ces matières.

3. Grains abrasifs composites frittés selon l'une des revendications 1 ou 2 caractérisés en ce que les matières dures consistent en un ou plusieurs composés du groupe SiC, TiB₂, Al₂O₃, TiC, AlON, Si₃N₄, B₄C, TiN, TiCN, WC, Cr₃C₂, VC, AIN, WTiC, SiAlON, TaC, NbC, W₂C, CBN, CrAlC, VMeC, TiMeC, Me représentant des métaux des groupes 4a, 5a, 6a de la Classification Périodique des Eléments.

4. Grains abrasifs composites frittés selon une ou plusieurs des revendications 1 à 3 caractérisés en ce que la matière dure est prise dans le groupe des carbures

5. Grains abrasifs composites frittés selon revendication 4 caractérisés en ce que la matière dure est SiC.

6. Grains abrasifs composites frittés selon revendication 4 caractérisés en ce que la matière dure est TiC.

7. Grains abrasifs composites frittés selon revendication 4 caractérisés en ce que la matière dure est Cr₃C₂.

8. Procédé pour la préparation des grains abrasifs composites frittés selon une ou plusieurs des revendications 1 à 7 caractérisé en ce que, à un sol ou gel d'Al₂O₃ préparé de la manière habituelle, on ajoute des particules de matière dure et on fritte.

9. Utilisation des grains abrasifs composites frittés selon une ou plusieurs des revendications 1 à 8 pour la préparation de produits abrasifs ou d'outils abrasifs.
